# EUROPEAN PATENT SPECIFICATION

(11) **EP 0 766 598 B1**
(45) Date of publication and mention of the grant of the patent: **12.12.2001**
(21) Application number: 95922251.4
(22) Date of filing: 07.06.1995
(51) Int. Cl.: B01J 10/00, B01D 53/34, B01D 53/50, B01D 53/74, B01D 53/78, B01D 53/80, B01D 47/06

(54) **IMPROVED ENTRAINMENT SEPARATOR FOR HIGH VELOCITY GASES AND REHEATING OF SCRUBBER GASES**
VERBESSERTE FLUGSTROMTRENNVORRICHTUNG FÜR GASE VON HOHER GESCHWINDIGKEIT UND ZUR WIEDERAUFHEIZUNG VON WÄSCHERGASEN
SEPARATEUR DE GOUTTELETTES PERFECTIONNE POUR GAZ A GRANDE VITESSE ET RECHAUFFAGE DES GAZ D'EPURATEUR

(30) Priority: 09.06.1994 US 257085; 09.06.1994 US 257158
(43) Date of publication of application: 09.04.1997
(73) Proprietor: ABB ENVIRONMENTAL SYSTEMS, Birmingham AL 35243 (US)
(72) Inventor: BRESOWAR, Gerald, E., Homewood, AL 35209 (US)
(74) Representative: VOSSIUS & PARTNER
(86) International application number: US9507248
(87) International publication number: WO9533552

(56) References cited:
- DD-A- 301 548
- DE-A- 3 008 718
- DE-C- 3 434 133
- JP-A- 62 282 625
- US-A- 3 656 280
- US-A- 4 002 724
- US-A- 4 157 250
- US-A- 4 612 024
- IGCI FORUM '91, Washington D.C., 12 September 1991, RADER et al., "Incorporating Full-Scale Experience Into Advanced Limestone Wet FGD Designs", pages 7, 9 and 12.
- S02 CONTROL SYMPOSIUM, Boston, Massachusetts, 26 August 1993, JONES et al., "Mist Elimination System, Design and Specification for FGD Systems", pages 3 and 5.
- EPA AND EPRI FIRST COMBINED FGD AND DRY SO2 CONTROL SYMPOSIUM, HEGEMANN et al., "The Bischoff Flue Gas Desulfurization Process", pages 3-7.
- JOSEPH A. BABOR, "Basic College Chemistry", April 1953, CROWELL CO., NEW YORK, 2nd ed., page 256.

## Description

### Technical Field

The invention relates to improvements in separating liquid droplets from gas streams with greater efficiency and reliability and, in preferred form, enabling the removal of sulfur oxides (SOₓ) from combustion effluents. The invention is particularly applicable and useful for limestone-based wet scrubbing systems which employ counter-current contacting open spray towers to absorb SOₓ from effluent flue gases, and in particular, to open spray towers that operate at very high superficial gas velocities in order to improve contacting efficiency.

A number of industrial processes rely on contacting gas streams at high velocity with droplets of liquid and, then, separating the gas and the liquid. Among these, are various scrubbing processes such as those employed to remove sulfur oxides from combustion effluents.

Combustion of materials containing sulfur (*e.g.*, fuels such as oil and coal) produces a variety of oxides of sulfur which are referred to as a group as SOₓ. Regulations require reduction of SOₓ emissions. One efficient method for treating combustion effluents to remove SOₓ is limestone-based wet scrubbing. Limestone-based wet scrubbing technology is well developed and effective; however, very large equipment is required and costs are proportional. It would be desirable to permit the use of high gas velocities for a number of reasons explained in US-A-5 635 149.

Unfortunately, the use of high gas velocities in counter-current gas-liquid contactors, such as open spray towers, has the tendency to make the removal of entrained liquid droplets more difficult and aggravates problems associated keeping the mist elimination devices clean and with droplets impacting scrubber walls, roofs, and other equipment. Fouled mist eliminators in such processes tend to plug because the fouling liquid is supersaturated with calcium sulfate. Encrusted walls. roofs, and other equipment can increase pressure drops through the equipment and can periodically result in large pieces of deposited solids breaking off and damaging other important processing equipment, such as spray headers, nozzles, bracing, and so forth. In addition, solids from such fallout can enter the liquid or slurry processing system and cause plugging of nozzles, therefore compounding the degradation of system reliability. It would be desirable to have an improved apparatus for removing entrained liquid droplets *(e.g.,* scrubbing slurries) from rapidly-moving gas streams (*e*.*g*., combustion effluents).

Liquid entrainment separators, to be effective for their purpose, must cause liquid droplets to impinge on one or more surfaces to drop the liquid out of the gas. The surfaces must be easily drained and easily washed. They also must not significantly contribute to reentrainment of the liquid. It is preferred in many situations to employ a vertically-oriented mist eliminator, but these are not practical if it means that the gas stream must be turned from the vertical by contact with passage walls. Encrustation and its attendant problems would be the result.

It would be desirable to improve wet scrubbing and other technologies depending on gas-liquid contact with the removal of entrained liquid from the effluent gas by enabling more efficient removal of entrained liquid droplets with high throughput, low pressure drop and low tendency to cake or encrust with solids carried in the liquid.

Single-loop, open-tower systems employing calcium carbonate to react with the SOₓ are the simplest in construction and operation. These systems are often preferred because they can be operated with low pressure drop and have a low tendency to scale or plug. The advantages of their simplicity and reliability have, however, been offset in some situations by their large size which is related to the reactivity of the calcium carbonate slurries employed. For example, because they do not employ any trays or packings to improve contact between the effluent and the scrubbing liquid, tower heights are typically high and many levels of spray nozzles have been employed to assure good contact. Also, the ability of the scrubbing liquid to absorb SOₓ from the gas depends on available. alkalinity in the liquid, but solubility of calcium carbonate decreases with alkalinity -- again, towers have been designed high to facilitate good absorption of SOₓ even under high-load conditions.

It would be desirable to improve single-loop, open tower wet scrubbing employing calcium carbonate for treating SOₓ-laden combustion effluents, by increasing the linear flow rate of effluent upwardly through the tower and decreasing tower height to decrease space requirements for itself and to provide the added benefit of facilitating the use of a vertically-oriented, rotary, gas-to-gas heat exchanger.

### Background Art

The technology for wet scrubbing combustion effluents to remove SOₓ provides gas-liquid contact in a number of different configurations. Among the most prominent are the open countercurrent spray towers and towers which employ packings or trays. In the vast majority of these designs, gas flows vertically upward and the liquid flows downward, under the influence of gravity. The use of a variety of reagents has been suggested, but the most preferred are those which can be purchased at low cost and stored and transported with minimal special handling. Calcium carbonate (commercially available in a number of forms, including limestone) is a material of choice because it meets these criteria and, when properly processed, yields process byproducts that can be easily disposed of as landfill or sold as gypsum.

The design and operation of single-loop, countercurrent spray towers utilizing limestone is discussed by Rader and Bakke, in *Incorporating Full-Scale Experience Into Advanced Limestone Wet FGD Designs,* a paper presented at the IGCI Forum '91, September 12, 1991, in Washington, D.C. Open spray towers (*i*.*e*., those not having packings, trays or other means for facilitating gas-liquid contact) are presented as simple in design and of high reliability for flue gas desulfurization (FGD). The authors do not extensively discuss entrainment separators, but do show a two-stage mist eliminator and describe top and bottom washing.
A thorough discussion of conventional and commercially available mist eliminators is discussed by Jones, McIntush, Lundeen, Rhudy, and Bowen, in *Mist Elimination System Design and Specification for FGD Systems,* presented August 26, 1993, at the 1993 SO₂ Control Symposium, Boston, MA. The authors show through extensive testing in a special test rig that high, vertically-upward gas velocities (i.e., those greater than about 4.5 meters per second) in a spray zone are difficult to effectively demist because of a phenomena known as "breakthrough". Breakthrough occurs when the mist eliminator effectively is flooded with liquid due to inadequate drainage. Various mist eliminator designs experience this breakthrough at different gas velocities, depending on the vagaries of the particular design. However, in general, no mist eliminator is satisfactory in vertically upward gas flow above 4.5 meters per second, and all are at risk to experience breakthrough.

It would be desirable to provide mist elimination which was effective at gas velocities even higher than 4.5 meters per second disclosed by Rader and Bakke. One major supplier of vertical flow, limestone-based FGD systems has; a mist eliminator design proven suitable for gas velocities in the spray zone greater than 4.5 meters per second. The design is described most typically by the mist eliminator system at N. V. Provinciale Zeeuwse Energie-Maatschappij's Borsselle Power Station, Unit 12, located in the Netherlands, illustrated quite satisfactorily by Rosenberg and Koch in the July 10, 1989 report from Battelle's Stack Gas Emissions Control Coordination Center Group. The design is based on a horizontal flow mist eliminator oriented circumferentially about and above the vertical flow spray zone. Entrained slurry from the spray zone must travel up, then make a radial turn outwardly to pass through the mist eliminator. The mist eliminator operates at a superficial face velocity much lower than that in the spray zone of the tower, indeed less than 20% of the spray zone gas velocity. Further, the upper portions of the mist eliminator are under-utilized while the lower portions, those closest to the spray zone, handle most of the flue gas and entrained slurry. Such a unit as shown at Borsselle is expensive to construct and maintain. Should the Borsselle design be made shorter to lower the cost, then it could be and should be anticipated that severe roof deposits would occur due to impingement of vertically-directed droplets from the spray zone that did not make the turn into the mist eliminator. So while it is readily acknowledged and common practice to operate horizontal flow mist eliminators in limestone-based FGD service at gas velocities of 4.5 to 6.0 meters per second, the Borsselle design cannot be operated this way because of risk of roof deposits.

Impingement of slurry droplets on surfaces upstream or downstream of mist eliminators in limestone-based FGD systems is not desirable. Impinged droplets that do not disengage as droplets, *i*.*e*., are not washed off or slough off under their own weight, will form scale deposits as the dissolved calcium ions precipitate with absorbed sulfite oxidized to sulfate. These gypsum scale deposits will tend to build on themselves, growing at a substantial rate until mechanical forces or their sheer weight causes them to break off. This is a very undesirable situation which can, and has, caused serious damage to spray tower internals and other equipment.

The prior art does not directly address the points necessary to achieve improvements in removal of entrained liquid droplets in FGD scrubber gas streams moving vertically at velocities more than 4.5 meters per second without creating problems of the type mentioned above.

In single-loop, countercurrent, open scrubbing towers of the type discussed by Rader and Bakke, a scrubbing liquid based on calcium carbonate flows downwardly while the SOₓ-laden effluent flows upwardly. They summarize historical values for a range of parameters, including absorber gas velocity (giving a minimum of 6 and a maximum of 15 feet per second, *i.e.* about 2 to less than 4.5 meters per second), indicating that absorber gas velocity has a weak influence on the liquid-to-gas ratio (L/G), a key factor in both capital and operating expenses. The height of the spray contacting zone in these towers is not given, but typical values will be on the order of from about 6 to about 15 meters, historically considered an important factor in engineering an efficient system which can be expected to reliably remove at least 95% of the SOₓ from combustion effluents.

The SOₓ, principally SO₂, is absorbed in the descending scrubbing slurry and is collected in a reaction tank where calcium sulfite and calcium sulfate are formed. Desirably, the reaction tank is oxygenated to force the production of the sulfate. Once the crystals of sulfate are grown to a sufficient size, they are separated from the slurry in the reaction tank. These scrubbing towers are relatively economical to operate, but the size and resulting cost of the units can be a factor limiting the usefulness of scrubbers of this type in exiting power plants.

It is typical to utilize the heat of the incoming flue gas to reheat the desulfurized flue gases following scrubbing and prior to discharge through a stack. Unless this is done, a plume will be evident and any objectionable components remaining will not rise and disperse as desired. With the typical very high scrubbing towers of the prior art, a rotary, gas-to-gas heat exchanger is often employed in the horizontal position -- rotating about a vertical axis. The unit is positioned in a convenient location and duct work is configured to bring both gas streams to and from it. The horizontal orientation requires a substantial amount of ductwork interconnecting the reheater and the scrubbing tower, and because of the corrosiveness of the gases, this ductwork is quite expensive to fabricate and construct.

In a paper by K. R. Hegemann, *et al*., entitled *THE BISCHOFF FLUE GAS DESULFURIZATION PROCESS* (presented at the EPA and EPRI cosponsored First Combined FGD and Dry SO₂ Control Symposium, October 25-28, 1988) a scrubbing tower with a horizontally-oriented, vertical-shaft, rotary reheater of the type just described is discussed. It can be seen that the reheater placed in this orientation requires a substantial amount of expensive interconnecting duct work which is consistent with the great height of the scrubbing tower.

The Hegemann, *et al*. paper also depicts a hydrocyclone loop which separates a gypsum slurry from a wet scrubber into a coarse solids stream and a fine solids stream, with the fine solids stream being returned to the scrubber. In U.S. Patent No. 5,215,672, Rogers, *et al.* describe a process similar to that of Hegemann, *et al*. in that it employs a hydrocyclone as a primary dewatering device. In this case, after separating a fine solids stream from a coarse solids stream rich in gypsum, water as part of a thickened fines stream is disposed of along with at least a portion of the fines removed. Neither of these approaches, however, indicate how the use of a hydrocyclone of this type can be employed to reduce tower height and enable the reheater to be oriented to occupy less space and to require less interconnecting duct work.

The prior art does not directly address the points necessary to achieve tower size and reheater space improvements in the context of single-loop, open-tower, countercurrent limestone wet scrubbers for SOₓ reduction.

### Disclosure of the Invention

It is an object of the invention to improve the design and location of entrainment separators installed upstream of horizontal flow mist eliminators in gas-liquid contact equipment.

It is another object of the invention to improve the design and location of entrainment separators in single-loop, open-tower, countercurrent limestone wet scrubbers to permit effective removal of entrained liquid droplets in gases moving vertically upward at high velocity.

It is yet another object of the invention to improve the design and location of entrainment separators in single-loop, open-tower, countercurrent limestone wet scrubbers to permit effective removal of entrained liquid droplets in gases moving vertically upward at high velocity and to change the direction of flow away from the roof of the scrubbing tower.

It is another specific object of the invention to enable increasing the capacity and performance of single-loop, open-tower, countercurrent limestone wet scrubbers by increasing the gas velocity therethrough, without encountering large pressure drops from demisting, excessive encrustation on scrubber walls (especially roofs), plugging of the entrainment separator, and plugging or droplet breakthrough of the mist eliminator.

It is still another specific object of the invention to enable increasing the capacity and performance of single-loop, open-tower, countercurrent limestone wet scrubbers by increasing the gas velocity therethrough, turning the gas direction toward a final, horizontal flow mist eliminator, and establishing a relatively uniform velocity profile for gas entering the final mist eliminator.

It is a more specific object of the invention to reduce the size and space requirements of single-loop, open-tower, countercurrent limestone wet scrubbers for removing SOₓ from effluents and provide improved process efficiencies.

It is a further object of a preferred embodiment of the invention to improve the operation of single-loop, open-tower, countercurrent limestone wet scrubbers by reducing the height required for the spray contacting zone in the tower, reducing the amount of interconnecting duct work required for conventional flue gas reheating, and providing an overall improvement in process efficiency.

These and other objects are accomplished by the invention as recited in the claims which provides improved methods for wet scrubbing, particularly scrubbing effluents from the combustion of sulfur-containing fuels such as coal and solid waste.

In one aspect, the invention provides an improved wet scrubbing process for reducing the concentration of SOₓ in flue gases, comprising: directing a flow of flue gas upwardly through a scrubbing tower; introducing a spray of droplets of an aqueous slurry of finely-divided calcium carbonate, calcium sulfate, calcium sulfite, and other non-reactive solids, to contact the flue gas in a vertical scrubbing section, the slurry descending through the tower countercurrently to the flow of flue gas and being collected as a liquid after contact; passing the flue gas through a single pass entrainment separator positioned above and across the vertical scrubbing section at an angle to the flow effective to reduce the quantity of droplets entrained in the gas and to also turn the direction of flow of the flue gas. The entrainment separator is preferably effective to reduce the quantity of droplets by at least 40% and to also turn the direction of flow of the flue gases by at least 45° from the vertical axis of the tower. The flue gas is then passed through a well-drained, horizontal-flow mist eliminator downstream of the entrainment separator. In the preferred embodiment of single-loop, open-tower, countercurrent limestone wet scrubbers, the bulk gas velocity in the vertical scrubbing section is greater than about 4.5 meters per second.

Also preferably, the entrainment separator is oriented at an angle relative to the horizontal in the scrubbing tower, within the range of from about 10 to about 45°, and preferably causes a low pressure drop of less than about 37.36 Pa (0.15 inches of water), but yet removes at least 40% of droplets while consolidating a substantial portion of the remaining droplets into larger size fractions which can more readily be removed by downstream horizontal-flow mist eliminator.

In the preferred form, the entrainment separator utilizes single pass separator blades to collect droplets by impingement and to turn the gas in a direction most suitable for further mist elimination. The individual blades are held parallel to one another in each of a plurality of assemblies. The individual blades are oriented at an angle within the range of from about 45° to about 55° from the vertical. Typically, the individual blades are parallelogram-shaped pieces of from about 15 to about 23 centimeters in minor dimension and from about 60 to about 150 centimeters in major dimension. Also typically, the spacing between individual blades will typically be from about 40 to about 70% of the minor dimension of the individual blades. A plurality of assemblies of individual blades are preferably oriented at an angle in the range of from about 120° to about 150° with respect to one another to form a chevron pattern. The blades are preferably washed periodically by spraying wash water directly onto the blades from both the top and the bottom.

In another aspect, the invention provides an improved wet scrubbing process for reducing the concentration of SOₓ in a flue gas. comprising: (a) transferring heat from a SOₓ-containing flue gas by directing said gas through an inlet in a lower section of a vertically-oriented, horizontal-shaft. rotary heat exchanger, the heat exchanger having a lower section and an upper section, each with gas inlets and outlets. and a heat exchange rotor having a peripheral heat exchange surface and a horizontal axis of rotation to permit the heat exchange surface of the rotor to move in a vertical plane between the upper and lower sections; (b) directing the flue gas to flow upwardly through a scrubbing tower having an spray contacting zone height of less than 6 meters; (c) introducing a spray of an aqueous slurry of finely-divided calcium carbonate, calcium sulfate, calcium sulfite, and non-reactive solids to descend through the tower countercurrently to the flow of flue gas to scrub the flue gas of SOₓ and produce a scrubbed flue gas; (d) removing all but as very small portion of the entrained mist from the flue gas; and (e) directing the flow of flue gas from the top of the tower through the top of said heat exchanger to transfer heat from the SOₓ-containing flue gas to the scrubbed flue gas.

Furthermore, reference is made to a wet scrubbing apparatus for reducing the concentration of SOₓ in flue gases, comprising: (a) a heat exchanger having a lower section and an upper section, each with gas inlets and outlets, and a heat exchange rotor having a peripheral heat exchange surface and a horizontal axis of rotation to permit the heat exchange surface of the rotor to move in a vertical plane between the upper and lower sections; (b) a scrubbing tower comprising a gas inlet duct, a gas outlet duct, and a vertical scrubbing section, the spray contacting zone height being less than 6 meters high; (c) an array of spray devices positioned within said scrubbing section configured to introduce a spray of an aqueous slurry of finely-divided calcium carbonate, calcium sulfate. calcium sulfite, and non-reactive solids to descend through the tower countercurrently to the flow of flue gas; (d) a set of one or more entrainment separators and/or mist eliminators to remove almost all of the entrained mist from the flue gas; and (e) ducts to pass a flow of SOₓ-containing flue gas through the inlet at the bottom of said rotary heat exchanger and out of the outlet at that location, and to direct the flow of flue gas from the top of the tower through the inlet at the top of said heat exchanger to transfer heat from the SOₓ-containing flue gas to the scrubbed flue gas and out of the outlet at that location.

### Brief Description of the Drawings

The invention will be better understood and its advantages will be better appreciated from the following detailed description, especially when read in light of the accompanying drawings, wherein:
Figure 1 is a schematic view of a preferred embodiment of the process of the invention employing a single-loop, open-tower, countercurrent limestone wet scrubber;
Figure 2 is a perspective view of the entrainment separator shown in the spray tower of Figure 1;
Figure 3 is a perspective view of an alternative embodiment of an entrainment separator of the invention; and
Figure 4 is a schematic view of a preferred embodiment of the process and apparatus of the invention employing a single-loop, open-tower, countercurrent limestone wet scrubber and a vertically-oriented, horizontal-shaft rotary heat exchanger.

### Industrial Applicability

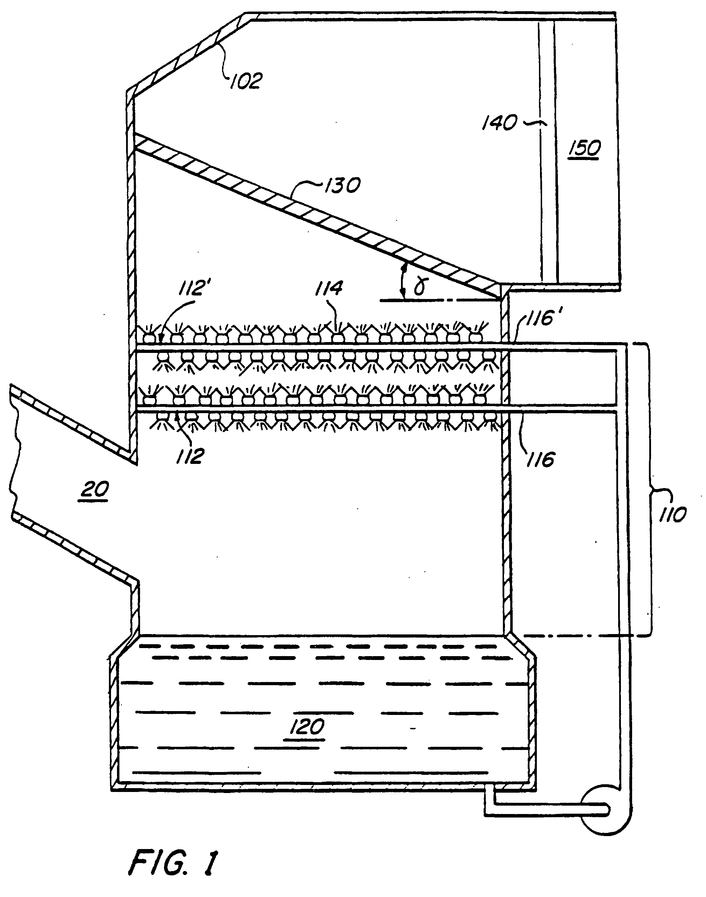

The following description is centered on the preferred embodiment of Figure 1 which is a single-loop, open-tower, countercurrent limestone wet scrubbing operation for removing sulfur oxides, principally as SO₂, from combustion effluents. It will be apparent from the following description, however, that the technology of the invention has application to other gas-liquid operations and to other types of scrubbers.

The preferred process scheme of Figure 1 shows an effluent, such as from a coal-fired industrial or utility boiler, entering wet scrubber 100 via inlet duct 20. The gas flows upwardly through vertical scrubbing section 110 in the tower, countercurrent to a spray of an aqueous slurry which contains finely-divided limestone discharged from a bank of spray nozzles 112 and 112'. The spray is broken into droplets in the tower. The bulk gas velocities according to the invention are above 4.5, and preferably from about 5 up to about 6, meters per second. These gas velocities are desired for single-loop, open-tower wet limestone scrubbers because they facilitate the treatment of flue gases with lower relative amounts of aqueous slurry, *e.g.* lower L/G ratios.

Limestone is the preferred form of calcium carbonate but can be replaced with another form, if desired. In addition to limestone, other forms of calcium carbonate include oyster shells, aragonite, calcite, chalk, marble, marl, and travertine. It can be mined or manufactured. In this description, the terms calcium carbonate and limestone are used interchangeably. The limestone is preferably finely divided, preferably to a weight median particle size of less than about 8 µm as introduced.
The sulfur oxides in the effluent are absorbed into the aqueous phase of the slurry and react with available calcium to form calcium sulfite, principally, which can then be oxidized to form calcium sulfate. The reaction occurs to some extent in the falling droplets, but is effected mainly in reaction tank 120 which collects the slurry.

The scrubbed effluent passes through an entrainment separator 130 of the invention where a substantial portion of the entrained droplets are removed and where the effluent flow is diverted in direction. The bulk of the effluent flow is changed from vertical to near horizontal. This has several advantages including the reduced impingement of slurry onto the roof 102 of the scrubbing tower. Also, and importantly, it permits high effluent velocities with high demisting efficiency by demisting an essentially horizontal flow through vertical mist eliminator 140. The high gas velocities in the vertical scrubbing section 110 in turn have the advantage that they better fluidize the droplets of scrubbing slurry giving each droplet a greater contact time with the effluent for a given tower height. The scrubbed and demisted effluent can then be discharged through duct 150.

At the high gas velocities desired for improvement of the FGD process, problems of encrustation of the roof 102 of the tower and of the mist eliminators of conventional construction would be experienced unless measures afforded by the invention were taken. This encrustation can occur wherever entrained slurry liquid is allowed to gather and not be washed or drained off the surfaces. The entrained slurry can quickly become supersaturated with calcium sulfate, thereby precipitating a gypsum scale deposit which can grow to a severe encrustation. When severe, encrustion can increase the pressure drop through the scrubber and cause large pieces to break off and fall into the spray tower -- potentially damaging headers, nozzles, or support members, and potentially falling through to the reaction tank 120, where such deposits can be transported by the recycle pump to the headers 112 and 112', causing plugging of the spray nozzles 114.

The use of more efficient mist eliminators in lieu of an entrainment separator might be considered an effective solution; however, for reasons previously described, mist eliminators are largely ineffective at the vertical gas velocities of about 4.5 to about 6.0 meters per second. Without the invention, the high velocities are not practical due to the deposits which will occur on the roof 102.

It might be asserted that simply washing the roof 120 and exposed surfaces with fresh water might be adequate to prevent encrustation without employment of the invention. However, while this may indeed be feasible, the invention has other advantages that are not afforded by simple washing of the exposed surfaces. Use of the invention achieves these other advantages simultaneously while making it unnecessary to wash the exposed surfaces.

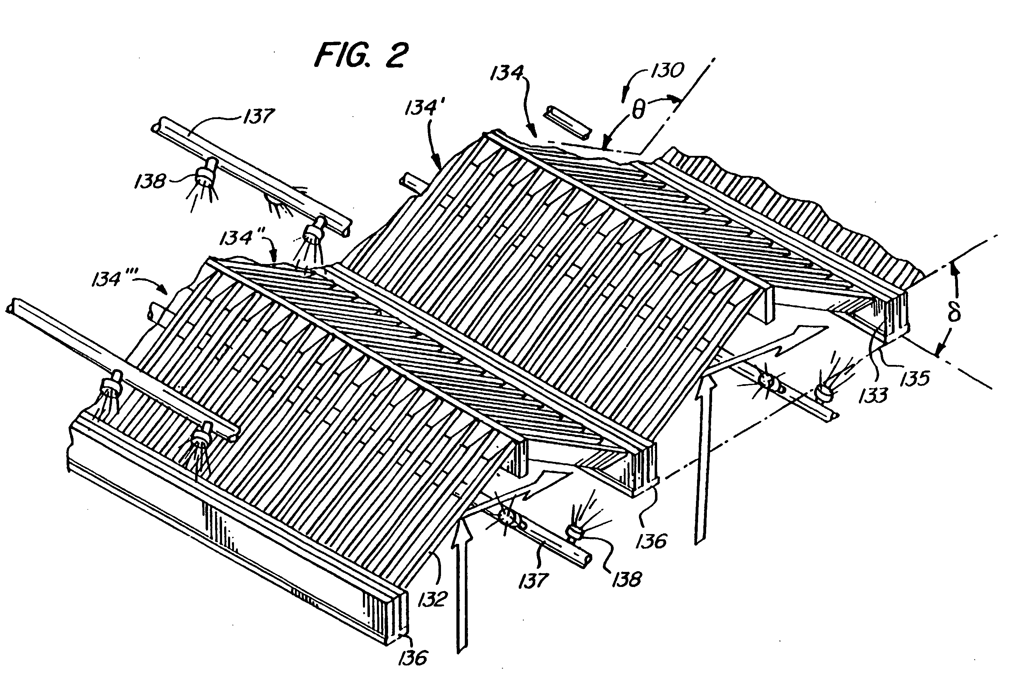

The invention positions a single pass entrainment separator 130 above and across the vertical scrubbing section 110. The design and location of the entrainment separator 130 are effective to reduce the quantity of moisture droplets and to also turn the direction of flow of the flue gases to an orientation effective for efficient utilization of a high efficiency, horizontal-flow mist eliminator. The entrainment separator 130 is illustrated in Figure 2 as oriented at an angle *y* relative to the horizontal in scrubbing tower 100. This angle will preferably be within the range of from about 10 to about 45°, *e.g.* about 20°.

The preferred form of the separator 130 is shown in Figure 2 to utilize single pass separator blades 132 to collect droplets by impingement and to turn the gas in a direction most suitable for further mist elimination and, preferably, away from direct impingement with the upper wall 102 of the scrubbing tower. The individual blades 132 are mounted in frames 133 to form assemblies 134, 134', *etc.* As shown, the assemblies are composed of many blades, but the actual number of blades per assembly will vary depending on the desired weight of each assembly, that weight being such that one or two maintenance personnel can readily install or remove an assembly as required. Typically about three to six blades will makeup one assembly. The assemblies are arranged adjacently to make the entire entrainment separator array. The lower edges of the frames 133 define a lower surface 135 of the assemblies 134, *etc.* The individual blades 132 are oriented at an angle δ with respect to the vertical. Typically, a blade of this type will be a rectangular piece of from about 15 to about 23 centimeters in minor dimension and from about 60 to about 150 centimeters in major dimension. Spacing between individual blades will typically be from about 40 to about 70% of the minor dimension of the individual blades. Angle δ will preferably be within the range of from about 35 to about 55°, the exact value depending on the desired degree of flow direction of the effluent stream.

The assemblies 134, *etc.,* are constructed and oriented in a fashion that facilitates excellent drainage. The individual assemblies arranged in a pattern of chevrons as illustrated. The assemblies 134, *etc.*, are preferably oriented at an angle θ, typically in the range of from about 120 to about 150°, and preferably in the range of from about 125 to about 145° ( most preferably about 140°). The entrainment separator structure is supported by members 136 which run the lengths of each of the assemblies. Other arrangements of supporting structures are possible. While shown in rectangular sections in the Figure, the scrubbing tower will typically have a round cross section, and the assemblies near the wall will have to be shaped appropriately.

The structure of the entrainment separator 130 permits direct contact washing of the blades by means of fixed nozzle lances 137 having spray nozzles 138 capable of spraying wash water directly on to the blades from both the top and the bottom. Washing is typically done by operating each washer header separately and sequentially with the others, however other washing schemes are possible. For instance, it may be more convenient to operate two headers simultaneously. The wash water is of sufficient quality and is used in sufficient quantity to reduce the level of saturated, dissolved salts on the separator surfaces. Typical wash rates while a header is operating may be about 16 to about 60 liters per minute per square meter of area. Washing on the top of the entrainment separator will generally be in this same range, but less frequently then on bottom. It is preferred that washing the top and bottom of the assemblies occurs routinely, that is, at frequent cycles to prevent buildup of gypsum deposits. Together with the good drainage afforded by the chevron-shaped arrangement of assemblies 134, *etc*., the use of high quality wash water and frequent washing affords practically deposit-free operation. However, the washing sequence and water may vary depending on the needs of the FGD process.

It is a feature of the invention that the separation efficiency of the entrainment separator need not be as high as multipass separators employed in the prior art because the ability to redirect the flow from vertical to horizontal enables the use of a high-efficiency, horizontal-flow mist eliminator 140. Thus, even though the entrainment removal efficiency is lower than might be thought desirable for wet scrubbing towers, the entrainment separator produces very low pressure loss, *e*.*g*. less than about 37.36 Pa (0.15 inches of water), reduces or consolidates up to 40% of the droplets less than 100 µm, and has other advantages in terms of cleanability, drainage, ease of maintenance, ruggedness, direction of the gas flow from the upper wall and roof surfaces of the tower and relatively uniform orientation of the gas flow toward a highly-efficient, horizontal-flow mist eliminator 140. The mist eliminator 140 is preferably of the baffle type. *e.g.* a zig-zag baffle of the type shown in the above Jones, *et al*. paper.

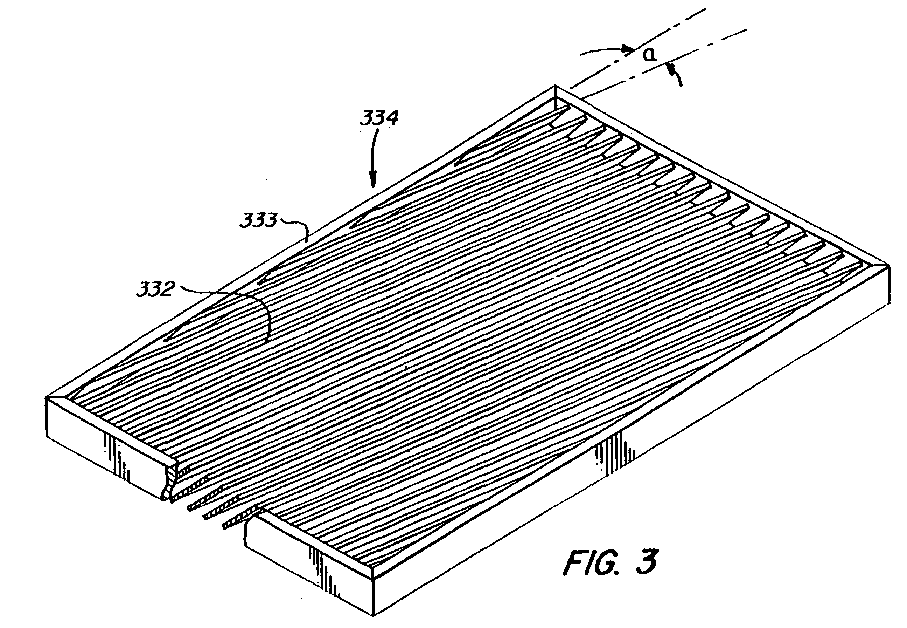

An alternative embodiment is illustrated in Figure 3, showing a single assembly 334 of vanes 332 laid out in diagonal fashion in a flat panel supported by a frame 333. The vanes are oriented at an angle **a** (*e.g.*, from about 15 to about 40°, preferably about 20°) with respect to the frame and a similar angle to the vertical as in the embodiment of Figure 2.

It is important to note that vane assemblies illustrated in Figures 3 are not chevron shaped assemblies, but rather are flat projections between support members 136. Good drainage is facilitated by gravity acting on captured droplets through the drainage path afforded by the angle **a** and the angle α.

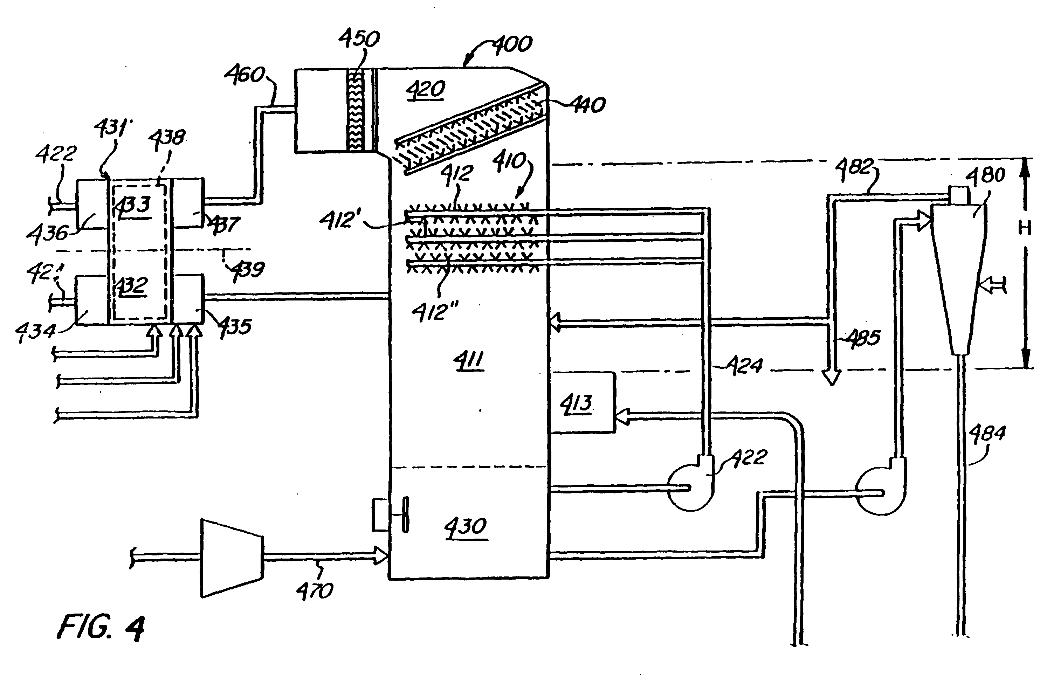

The following description is centered on a preferred embodiment as illustrated in Figure 4 which depicts a single-loop, open-tower, countercurrent limestone wet scrubbing operation for removing sulfur oxides, principally as SO₂, from combustion effluents. It will be apparent from the following description, however, that aspects of the invention will provide advantages to other types of scrubbers.

The process scheme of Figure 4 shows treatment of an effluent following cleaning, such as in an electrostatic precipitator or fabric filter (not shown), to remove entrained solids to a practical extent. The cleaned flue gas is then passed via duct 421 to a heat exchanger 431 having a lower section 432 and an upper section 433. Both the lower and the upper sections have gas inlets (434, 437) and outlets (435, 436). The relatively hot gas (*e.g.*, from about 420 to about 175 °C) heat an internal heat exchange rotor 438 (shown in phantom lines) having a peripheral heat exchange surface. The rotor 438 rotates about a horizontal axis of rotation 439 to permit the heat exchange surface of the rotor to move in a vertical plane between the upper and lower sections. Heat picked up from the entering flue gas is in this manner used to reheat the scrubbed flue gas entering the upper section 433 through inlet 437 and exiting through outlet 436 prior to discharge through duct 422 to a stack (not shown).

Upon exit from outlet 435 in the lower section, the SOₓ-containing flue gas is sent to wet scrubbing tower 400 wherein it flows upwardly, countercurrent to a spray of an aqueous slurry which contains finely-divided limestone discharged within a vertical scrubbing section 410 from a bank of spray nozzles. From the scrubbing section 410, the gas continues through gas outlet duct 420. The tower is configured to direct a flow of flue gas upwardly through the vertical scrubbing section. The scrubbing slurry falling through the vertical scrubbing section 410 is collected in reaction tank 430. The total height of the spray contacting zone 411 within the scrubbing section 410 is less than 6 meters.

Limestone is the preferred form of calcium carbonate but can be replaced with another form, if desired. In addition to limestone, other forms of calcium carbonate include oyster shells, aragonite, calcite, chalk, marble, marl, and travertine. It can be mined or manufactured. In this description, the terms calcium carbonate and limestone are used interchangeably.

The limestone is finely divided, preferably by grinding, to achieve a weight median diameter of about 10, and most preferably 8 µm or less with 99% or more of the particles by weight being less than 44 µm. This is extremely fine for wet scrubbing in an open tower with a countercurrent flow of limestone slurry, the more typical grind size of the prior art being a weight median diameter of 15 µm or less with 90% or more of the particles by weight less than 44 µm. In further contrast to the prior art. it is noted that the preferred grind size of the invention will yield particles with a weight median particle size of less than about 6 µm, with 99.5% by weight of the particles being less than 44 µm. The use of a grind of this size has several advantages, especially when the slurry in the reaction tank is processed through a hydrocyclone to remove gypsum and concentrate calcium carbonate as even finer particles as described below.

The vertical scrubbing section 410 contains an array of spray devices positioned within it The array is configured to introduce a spray of an aqueous slurry of finely-divided calcium carbonate, calcium sulfate, calcium sulfite, and non-reactive solids to descend through the tower countercurrently to the flow of flue gas. The Figure illustrates a bank of spray nozzles which is shown to include three racks 412, 412' and 412" of nozzles.

The nozzles are preferably arranged with a spacing between racks of less than about 2 meters and with the direction of flow from adjacent nozzles alternating between upward and downward. By reducing the spacing between the nozzles, reducing the number of levels in use at any time (preferably to 2), and increasing the rate of gas flow upwardly through the vertical scrubbing section, it is possible to maintain tower height in the spray contacting zone to less than 6 meters, preferably in the range of from about 4 to about 6 meters (measured from the top of the inlet duct to the bottom of the inclined entrainment separator 440, shown in the drawing as H.

A preferred arrangement of nozzles of this type is described in US-A-5 635 149.

Reaction tank 430 is located below the array of spray devices to enable collection of the slurry after a period of contact with the flue gas within the spray contacting zone 411. The reaction tank 430 is of a size suitable to permit reaction of the dissolved SO₂ with dissolved oxygen to form sulfate, the sulfate then reacting with the dissolved calcium ions to form crystals of gypsum having a weight median diameter at least 2, and preferably from 5 to 10, times as large as the particles of calcium carbonate added as feed.

By virtue of the difference in particle sizes between the calcium carbonate and the gypsum, and the means employed for separating the gypsum and concentrating the calcium carbonate as will be explained in detail below, the solids concentration of calcium carbonate can be increased by about 20 to about 50% above the concentrations attainable in countercurrent designs of prior art. It is a further advantage that the slurry will have a higher stoichiometric ratio of calcium to sulfur than prior art systems, typically being at least 1.3 and preferably being about 1.4 or greater.

The sulfur oxides in the effluent are absorbed into the aqueous phase of the slurry in vertical scrubbing section 410 and react with available alkalinity in the form of hydroxide ions to form bisulfite, which can be partially oxidized in the scrubbing section 410 and almost fully oxidized in the reaction tank 430 to form sulfate. The alkalinity is principally derived from the dissolution of calcium carbonate, which occurs both in the scrubbing section 410 and in the reaction tank 430. An oxygen sparge, as conventional in the art, is preferably employed to assure sufficient reaction, although some oxygen can be obtained from the flue gas itself in the scrubbing section 410. The reaction occurs to some extent in the falling droplets, but is effected mainly in reaction tank 430 which collects the slurry. It is one of the novel and improved features of the invention that the residence time in the reaction tank is reduced from the typical commercial value of about 15 hours down to about 6 hours. The reduction of the residence time in the reaction tank has a number of advantages in terms of processing ease, equipment sizing and quality of the byproduct gypsum.

The pH of the slurry in the reaction tank 430 is preferably in the range of from about 5.0 to about 6.3, most preferably from about 5.8 to about 6.3. Higher pH indicates a higher available alkalinity in the slurry liquid and a correspondingly higher capacity of the liquid to absorb SOₓ. It is an advantage that, because the calcium carbonate is supplied as fine particles and is recycled, also in the form of fine particles, a higher available alkalinity is possible. Low pH is typically employed on systems of prior art to increase the rate of reaction of calcium carbonate, but this normally reduces the absorption of SOₓ in the scrubbing section 410 because of the decreased available alkalinity. The small particle size offers increased available alkalinity even at lower than desired pH, thereby offsetting to a large extent the impact of low pH on the scrubbing capacity of the slurry.

Associated with the reaction tank 430 and the array of spray devices positioned within the vertical scrubbing section 410, is a spray slurry supply means comprising at least one pump 422 and associated conduit 424 for withdrawing slurry from the reaction tank 430 and delivering slurry to the array of spray devices positioned within the scrubbing section.

The scrubbed effluent is substantially freed of entrained droplets of liquid and diverted in direction of flow by entrainment separator 440 and then mist eliminator 450. The bulk of the effluent flow is changed from vertical to near horizontal. The scrubbed and demisted effluent can then be discharged to the heat exchanger 431 by passage via duct 460 to upper inlet 437.

The scrubbers of the invention will preferably comprise a single pass entrainment separator 440 effective to reduce the quantity of moisture droplets and to also turn the direction of flow of the flue gases to an orientation effective for efficient utilization of a horizontal flow mist eliminator. Entrainment separators of this type are described above.

The air in line 470 facilitates supplying oxygen for the oxidation of calcium sulfite to calcium sulfate. The tank is preferably stirred by conventional means which are not illustrated in the Figure.

Associated with the reaction tank 430 is a hydrocyclone 480 which is employed to remove a portion of the slurry in reaction tank 430 for the purposes of concentrating fine particles of calcium carbonate for recycle as well as for discharging gypsum. The hydrocyclone 480 separates the slurry from the reaction tank into a recycle stream 482 rich in small particles of calcium carbonate and another 484 containing a majority of relatively larger particles of calcium sulfate. It is preferred to provide a blow down from the recycle overflow, namely from recycle stream 482. This is shown here as discharge conduit 485.

Preferably, the stoichiometric ratio of calcium to sulfur in recycle stream 484 will be in the range of from about 1.2 to about 2.0, most preferably from about 1.3 to about 1.4. The concentration of suspended solids in the recycle stream will typically be in the range of from about 1 to about 10%, by weight, most typically from about 2 to about 6%. Separation of the majority of the calcium sulfate from the limestone by hydrocyclone 482, in addition to raising the noted stoichiometric ratio and the available alkalinity, also decreases the solids content of the slurry.

The above description is for the purpose of teaching the person of ordinary skill in the art how to practice the invention, and it is not intended to detail all of those obvious modifications and variations of it which will become apparent to the skilled worker upon reading the description. It is intended, however, that all such obvious modifications and variations be included within the scope of the invention which is defined by the following claims. The claims are meant to cover the claimed elements and steps in any arrangement or sequence which is effective to meet the objectives there intended, unless the context specifically indicates the contrary.

## Claims

1. An improved wet scrubbing process for reducing the concentration of SO₂ in flue gases, wherein flue gas in need of scrubbing is passed vertically upwardly through an open spray tower, aqueous slurry is passed downwardly countercurrent to and in contact with the flue gas, the slurry is collected in a reaction tank (120) after contact, slurry is withdrawn from the tank and recirculated for further contact and the gas following contact with the slurry are discharged, **characterized in that**:
following contact with the slurry, but prior to discharge, the flue gas is passed through a single pass entrainment separator (130) positioned above and across the vertical scrubbing section (110) at an angle (γ) within the range of 10° to 45° relative to the horizontal effective to reduce or consolidate a substantial quantity of droplets entrained in the gas and to also turn the direction of flow of the flue gas from the vertical, said entrainment separator includes individual single-pass separator blades (132), said individual blades are oriented at an angle (δ) within the range of 35° to 55° from the vertical.

2. A process according to claim 1 wherein the entrainment separator is effective to reduce the quantity of droplets by at least 40% and to turn the direction of flow of the flue gases by at least 45°from the vertical axis of the tower.

3. A process according to claim 1 wherein the flues gas is passed through a well-drained, horizontal flow mist eliminator (140) downstream of the entrainment separator.

4. A process according to claim 1 wherein the vertical bulk gas velocity is greater than 4.5 meters per second.

5. A process according to claim 1 wherein the entrainment separator causes a pressure drop of less than 37.36 Pa (0.15 inches of water), and removes or consolidates at least 40% of droplets smaller than 100 µm.

6. A process according to claim 1 wherein the entrainment separator utilizes single pass separator blades to collect droplets by impingement and to turn the gas in a direction most suitable for further mist elimination, the individual blades being held parallel to one another in each of a plurality of assemblies (134, 134', etc.).

7. A process according to claim 1 wherein and the spacing between individual blades will typically be from 40 to 70% of the minor dimension of the individual blades.

8. A process according to claim 1 wherein the entrainment separator comprises a plurality of assembiles of individual blades, said assemblles being oriented at an angle (Θ) in the range of from 120° to 150° with respect to one another, whereby said assemblies form a chevron pattern.

9. A process according to claim 1 wherein the blades are washed periodically by spraying wash water directly onto the blades from both the top and the bottom.

## Patentansprüche

1. Naßreinigungsverfahren zum Reduzieren der Konzentration von SO₂ in Abgasen, wobei das. zu reinigende Abgas vertikal nach oben durch einen offenen Sprühturm geleitet wird, wässeriger Schlamm entgegengerichtet dazu nach unten geleitet und in Kontakt mit dem Abgas gebracht wird, der Schlamm nach dem Kontakt in einem Reaktionsbehälter (120) gesammelt, der Schlamm vom Behälter abgeleitet und für weiteren Kontakt wieder in Umlauf gebracht und das Gas nach dem Kontakt mit dem Schlamm abgeleitet wird;
**dadurch gekennzeichnet, daß**
das Abgas nach dem Kontakt mit dem Schlamm, jedoch vor der Ableitung, durch einen einstufigen Flugstromseparator (130) geleitet wird, der über dem und quer zum vertikalen Reinigungsabschnitt (110) unter einem Winkel (γ) im Bereich von 10° bis 45° bezüglich der Horizontalen angeordnet und dazu geeignet ist, eine wesentliche Menge von im Gas mitgerissenen Tropfen zu reduzieren oder zu vereinigen und außerdem die Abgasstromrichtung bezüglich der Vertikalen zu drehen, wobei der Flugstromseparator einzelne Separatorlamellen (132) aufweist, wobei die einzelnen Lamellen bezüglich der Vertikalen unter einem Winkel (δ) im Bereich von 35° bis 55° ausgerichtet sind.

2. Verfahren nach Anspruch 1, wobei der Flugstromseparator dazu geeignet ist, die Menge von Tropfen um mindestens 40% zu reduzieren und die Abgasstromrichtung um mindestens 45° bezüglich der vertikalen Turmachse zu drehen.

3. Verfahren nach Anspruch 1, wobei das Abgas durch einen stromabwärts vom Flugstromseparator angeordneten Horizontalstrom-Tropfenabscheider (140) mit gutem Ablauf geleitet wird.

4. Verfahren nach Anspruch 1, wobei die vertikale Oberflächengasgeschwindigkeit größer ist als 4, 5 m/s.

5. Verfahren nach Anspruch 1, wobei der Flugstromseparator einen Druckabfall von weniger als 37,36 Pa (0,15 Zoll Wasser) erzeugt und mindestens 40% von Tropfen entfernt oder vereinigt, die kleiner sind als 100 µm.

6. Verfahren nach Anspruch 1, wobei der Flugstromseparator einstufige Separatorlamellen verwendet, um Tropfen durch Aufprall aufzufangen und den Gasstrom in eine Richtung zu drehen, die für eine weitere Feuchtigkeitsentfernung am besten geeignet ist, wobei die einzelnen Lamellen in jeder von mehreren Einheiten (134, 134', usw.) parallel zueinander gehalten werden.

7. Verfahren nach Anspruch 1, wobei der Abstand zwischen einzelnen Lamellen typischerweise 40 bis 70% der kleinen Abmessung der einzelnen Lamellen beträgt.

8. Verfahren nach Anspruch 1, wobei der Flugstromseparator mehrere aus einzelnen Lamellen bestehende Einheiten aufweist, wobei die Einheiten unter einem Winkel (θ) im Bereich von 120° bis 150° relativ zueinander angeordnet sind, wodurch die Einheiten ein Zickzackmuster bilden.

9. Verfahren nach Anspruch 1, wobei die Lamellen durch direktes Aufsprühen von Waschwasser auf die Lamellen von oben und unten periodisch gereinigt werden.

## Revendications

1. Procédé d'épuration par voie humide amélioré, pour réduire la concentration en SO₂ dans les gaz de fumées, dans lequel des gaz de fumées devant être épurés sont passés verticalement en direction ascendante par une tour de pulvérisation ouverte, une boue aqueuse est passée en contre-courant descendant sur et en contact avec les gaz de fumée, les boues étant collectées dans un récipient de réaction (120) après la mise en contact, les boues étant extraites du récipient et mises' en circulation pour produire un autre contact et les gaz, à la suite du processus de mise en contact avec la boue, étant déchargés, **caractérisé en ce que** :
à la suite du contact avec la boue, mais avant la décharge, les gaz d'échappement sont passés par un séparateur de gouttelettes à simple passage (130) placé au dessus dans le section d'épuration verticale (110) sous un angle (γ) situé dans la plage de 10° à 45° par rapport à l'horizontale, de façon efficace pour réduire ou consolider une quantité substantielle de gouttelettes ayant été entraînées dans le gaz et également pour changer la direction d'écoulement des gaz de fumées passant par rapport à la verticale, ledit séparateur de gouttelettes comprend des pales de séparateur à simple passage individuelles (132), lesdites pales individuelles étant orientées sous un angle (δ) de 35° à 55° par rapport à la verticale.

2. Un processus selon la revendication 1, dans lequel le séparateur de gouttelettes agit pour réduire la quantité de gouttelettes d'au moins 40% et pour changer la direction d'écoulement des gaz de fumées d'au moins 45° par rapport à l'axe vertical de la tour.

3. Un procédé selon la revendication 1, dans lequel les gaz de fumées sont passés par un dévésiculeur (140) à écoulement horizontal, équipé d'un puits de drain, installé en aval du séparateur de gouttelettes.

4. Un procédé selon la revendication 1, dans lequel la vitesse globale verticale des gaz est supérieure à 4,5 mètres par secondes.

5. Un procédé selon la revendication 1, dans lequel le séparateur de gouttelettes provoque une chute de pression inférieure à 37,36 Pa (0,15 pouce de colonne d'eau) et élimine ou consolide au moins 40% des gouttelettes. d'une taille inférieure à 100 µm.

6. Un procédé selon la revendication 1, dans lequel le séparateur de gouttelettes utilise des pales de séparateur à passage unique pour collecter les gouttelettes par impact et pour dévier les gaz dans une direction convenant mieux pour la dévésiculation supplémentaire, les pales individuelles étant maintenues parallèlement les unes aux autres dans chacun de la pluralité d'ensemble (134, 134', etc.).

7. Un procédé selon la revendication 1, dans lequel l'espacement entre les pales individuelles va typiquement être de 40 à 70 % de la dimension mineure des pales individuelles.

8. Un procédé selon la revendication 1, dans lequel le séparateur de gouttelettes comprend une pluralité d'ensembles de pales individuelles, lesdits ensembles étant' orientés sous un angle (θ) dans la plage de 120° à 150° les uns par rapport aux autres, de manière que lesdits ensembles forment un motif en chevron.

9. Un procédé sélon la revendication 1, dans lequel les pales sont lavées périodiquement par pulvérisation d'eau de lavage, directement sur les pales, depuis à la fois le haut et le bas.
